Europäisches Patentamt

European Patent Office

Office européen des brevets

(19)

(11) **EP 0 819 996 A2**

## (12) EUROPEAN PATENT APPLICATION

(43) Date of publication:
21.01.1998 Bulletin 1998/04

(51) Int. Cl.$^6$: **G05B 19/418**

(21) Application number: 97115530.4

(22) Date of filing: 02.04.1992

(84) Designated Contracting States:
DE GB

(30) Priority: 04.04.1991 JP 71488/91

(62) Document number(s) of the earlier application(s) in accordance with Art. 76 EPC:
92105701.4 / 0 508 308

(71) Applicant: HITACHI, LTD.
Chiyoda-ku, Tokyo 101 (JP)

(72) Inventors:
• Ohashi, Toshijiro
Chigasaki-shi (JP)
• Arimoto, Syoji
Kamakura-shi (JP)

• Miyakawa, Seii
Yokohama-shi (JP)
• Hayakawa, Mitsuhara
Konosu-shi (JP)

(74) Representative:
Altenburg, Udo, Dipl.-Phys. et al
Patent- und Rechtsanwälte,
Bardehle . Pagenberg . Dost . Altenburg .
Frohwitter . Geissler & Partner,
Galileiplatz 1
81679 München (DE)

Remarks:
This application was filed on 08 - 09 - 1997 as a divisional application to the application mentioned under INID code 62.

(54) **Automatic manufacturability evaluation method and system**

(57) Automatic manufacturability evaluation method and system (30) for automatically evaluating quantitatively on the basis of design information (22) created by using a CAD unit (21) whether a structure of a product as designed is easy to manufacture or assemble, for the purpose of increasing productivity of the product. With the aid of a processing unit such as CAD (21) and an information processing system (30) for evaluating manufacturability such as assemblability and processability, an assembling order, assembling method, processing method and others are estimated. On the basis of the results of the estimations, optimal assembling order and method, optimal processing method and others are determined, the results of which is outputted, as occasion requires.

FIG.1

EP 0 819 996 A2

## Description

BACKGROUND OF THE INVENTION

The present invention is directed to improvement of manufacturability of an article or product and relates to a method of automatically and quantitatively evaluating whether a designed structure of a product is easy to manufacture and more particularly whether it is easy to assemble and process on the basis of design information generated by using a computer-aided design system (hereinafter also referred to as the CAD in abbreviation) and an automatic manufacturability evaluation system for carrying out the method.

For evaluating whether a product of concern has a structure easy to manufacture, there are known various methods. According to a first method referred to as the design review method, the manufacturability (i.e. ease of manufacture) of a product is determined by those skilled in the design, production and other fields on the basis of their empirical knowledges or experiences, wherein a portion or an area to be improved, if any, are pointed out by them. This method is widely adopted. According to a second evaluation method also adopted generally, a process planning for an article or product is created on the basis of a design drawing, whereon estimated assembling cost and time are arithmetically determined, and by taking into account the calculated values, the expert engineer skilled in manufacturing the product makes decision as to favorableness or satisfactoriness of the designed structure.

As third and fourth evaluation methods, there can be mentioned those disclosed in an article entitled "KUMITATEYASUI SEKKEI (Design Easy To Implement)" and contained in "NIKKEI MECHANICAL" published March 21, 1988 pp. 37-48.

According to the third method, a part attaching process is analytically divided into several ten process elements, which are then imparted with respective evaluation scores in dependence on the degrees of ease or difficulty of carrying out the process elements. A process required for attaching a part is represented by possible combinations of the process elements, whereon assemblability (i.e. degree of ease of assembling) as a whole is evaluated or those process elements which makes difficult the part attachment are eliminated.

According to the fourth method, alignnability, positionability, chuckability, attachability and other items of parts are allocated with scores determined intuitively or empirically for representing degrees of ease or difficulty of aligning, positioning, chucking, attaching and so of the part, whereon assemblability as a whole is evaluated on the basic of a sum of the abovementioned scores or those items which provide difficulty in assembling are exclued. Further, as a fifth method, there may be mentioned an assemblability evaluation method and a processability evaluation method disclosed in an extra issue "Meka Sekkei Jutzu (Mechanical Design Engineering), Series III" of "Nikkei Mechanical", pp. 191-199. This fifth method is concerned with an evaluation of a product assemblability on the basis of quantitative indexes related to operation costs expected to be involved.

The first mentioned prior art evaluation method (i.e. design review method) is of qualitative nature rather than quantitative and is disadvantageous in that not a little difficulty is encountered in expressing objectively and quantitatively to what extent the structure of a product under evaluation is favorable or unfavorable (satisfactory or dissatisfactory) or how effective an improvement attempted will be. Besides, this method suffers from a problem that it can be carried out only by those having sufficient skillfulness in the design and process engineering. According to the second mentioned prior art evaluation method (which is based on the estimated cost and time expected to be involved in the process or working), the cost and time can certainly be estimated for a product as a whole or for every individual part or for some of parts constituting the product. However, it is difficult to decide on the basis of only the assembling costs whether the designed structure can be qualified or whether any further improvement is necessary. Moreover, the evaluation requires not a few experiences and knowledges as well as lots of time for the calculations involved therein, which makes the evaluation very expensive. Besides, unless the design of a product of concern has been completed or substantially completed, evaluation itself is impossible or difficult at the least. Consequently, improvement or alteration of the design found necessary can not be done until the design has been completed, which in turn means that intolerably lot of time and expenditure will be taken for the alteration of the design once completed. Under the circumstances, many products designed rather unsatisfactorily or unfavorably are likely to be transferred to a production line without undergoing further improvement, thus giving rise to a problem that the attempt for enhancing the productivity and cost reduction often encounters obstacle. The third prior art evaluation method (which is based on the evaluation score and index) certainly permits a time-sparing evaluation without need for rich experience. However, there arise such problems that relation between the evaluation index and the cost and time involved in the processing is indefinite and that the result of evaluation is difficult to verify because of lacking of definite and concrete presentation of the engineering standards for determining the relation between the evaluation index and the expenditure. Accordingly, it is ambiguous what meaning a high evaluation score has, presenting a problem that it is difficult or impossible to decide with high accuracy whether the assemblability evaluation is of high or low quality or reliability. Besides, since the evaluation is made on a process basis, it is difficult to specify those parts of a product which are poor in attachability.

The fourth method is also disadvantageous in that any concrete engineering standards are inavailable for establishing relation between the evaluation index and the assembling cost, making it difficult or impossible to decide if a high evaluation score leads to a low cost or if a low score leads to a high cost. Additionally, a large number of items to be evaluated renders the evaluation process burdensome. In this manner, the fourth method is limited in the applicability. Furthermore, because the evaluation is impossible before the design has been completed, the fourth method is not suited for designing a product having a structure of high assemblability or parts of high attachability, to further disadvantage.

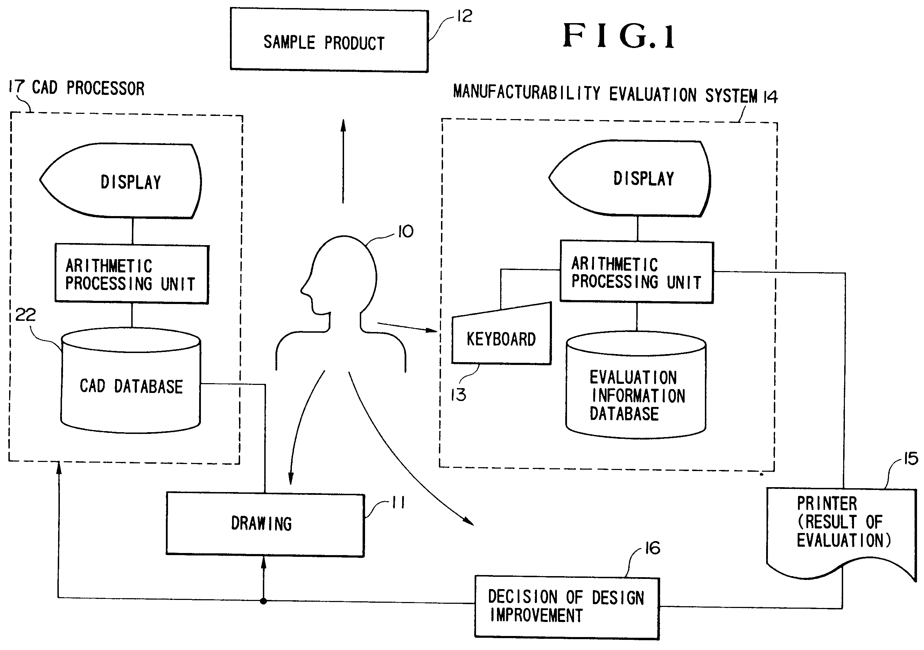

The fifth method is carried out by using a system of such arrangement as shown schematically in Fig. 1 of the accompanying drawings. Referring to the figure, an evaluator 10 reads out information required for evaluation from a drawing 11, a sample or the like and inputs the information to a manufacturability evaluation system 14 by means of a keyboard 13, whereon the evaluation is performed by the system 14. Subsequently, the evaluator 10 makes decision on the basis of the result of evaluation outputted from the system 14 through the printer 15 as to whether the manufacturing process of concern is satisfactory or dissatisfactory with the aid of a facility 16. Next, the evaluator 10 improves the design, if it is necessary, whereon design improvement information, if any, is fed back to a CAD processing system 17. Thus, it is necessary for the evaluator to have specific knowledge concerning the evaluation procedure. Besides, the evaluation is necessarily accompanied with time consumption for analyses and calculations involved in the evaluation. Furthermore, activity of designing with the aid of the CAD system tends to be interrupted by a work for evaluating manufacturability. In that case, consistent design procedure flow will considerably be disturbed, incurring another problem.

In brief, the prior art evaluation methods suffer from the shortcomings mentioned below.

(1) Evaluation is not quantitative but qualitative by nature, making difficult or impossible the quantitative evaluation.
(2) Evaluation can be made only by those having an abundance of experience or some knowledge of evaluation procedure.
(3) With the evaluation based only on such factors as the cost and time, it is difficult to decide whether the quality of design is satisfactory or not.
(4) Enormous labor or time is required for the evaluation.
(5) Evaluation can be made only after the design has been completed or at the time point close to the completion of the design, which makes it difficult to improve the design after the evaluation.
(6) It is difficult to improve the product or parts because of difficulty in deciding the quality of design on a part-by-part basis.
(7) Relation between the evaluation index and the cost is indefinite.
(8) Analysis and evaluation take a lot of time.

## SUMMARY OF THE INVENTION

It is therefore an object of the present invention to provide a product manufacturability evaluation method and a system for carrying out the method which can solve the problems of the prior art methods and systems mentioned above.

It is another object of the present invention to provide manufacturability evaluation procedure as well as method and system for automatically carrying out the manufacturability evaluation procedure which can enjoy advantages mentioned below:

(1) evaluation of quantitative nature,
(2) unnecessity of skillfulness of evaluator,
(3) evaluation of improved understandability not only for the assembling cost and the processing cost but also in respect to the qualification of structure of product from the preducibility point of view,
(4) easy evaluation,
(5) evaluation at an earlier stage of design and development,
(6) evaluation at the level of constituent parts,
(7) availability of evaluation index capable of representing definitely manufacturability of a product of concern and related to manufacturing cost of the product,
(8) possibility of the evaluation directly on the basis of information available from a CAD system in the course of designing, and/or
(9) capability of real-time evaluation in the course of designing.

In view of the above and other objects which will become apparent as the description procedes, the present invention provides manufacturability evaluation method and system capable of determining a most desirable manufacturing process on the basis of product design information read out from a storage unit and including at least shape information of parts constituting a product to be manufactured by estimating at least one of manufacturing processes for manufacturing the product on the basis of the design information read out, determining arithmetically indexes representing manufacturabilites (degrees of ease of manufacture) for each of the estimated manufacturing processes, and determining the most desirable one of the manufacturing processes on the basis of the indexes.

To this end, according to a first aspect of the invention, there is provided an automatic manufacturability evaluation method for automatically evaluating manufacturability of a product to be manufactured, which method comprises a step of reading product design information concerning parts constituting a product to be manufactured from a storage unit in which the information is previously stored, a manufacturing process estimating step for estimating at least a process for manufacturing the product on the basis of the product design information read out from the storage unit, and a manufacturability evaluation index calculation step of calculating a manufacturability evaluation index indicating a degree of ease of manufacturing the product (i.e. manufacturability thereof) by the estimated process.

Futher, according to a second aspect of the invention, there is provided an automatic manufacturability evaluation system for evaluating manufacturability of a product to be manufactured in an automated manner, which system comprises a storage unit for storing previously product design information concerning parts constituting a product to be manufactured, a product design information read unit for reading the product design information of parts constituting a product of concern from the storage unit by inputting information concerning the parts, a manufacturing process estimating unit for estimating at least a process of manufacturing the product on the basis of the product design information read out from the storage unit, and a manufacturability evaluation index calculation unit for calculating a manufacturability evaluation index indicating a degree of ease of manufacturing the product by the estimated process.

In a preferred embodiment of the invention, the product design information includes part identifying information such as names of parts constituting a product and attribute information concerning attributes of the parts such as shapes, sizes and the like, while the estimated manufacturing process or method usually includes at least one of a product assembling method, a part attaching sequence and a processing method.

For achieving the objects mentioned above, the present invention can be carried out in the modes mentioned below.

(1) For the quantitative evaluation, a part attachability evaluation score, a product assemblability evaluation score, a part processability evaluation score and a product processability evaluation score are arithmetically determined for each product and each part, whereon times and costs involved in assembling and processing are calculated on the basis of the evaluation scores mentioned above.
(2) In order to allow the evaluation to be carried out without need for abundance of experience, each of the part attaching operations and each of processing operations is classified into about twenty basic elements which can easily and clearly be understood, wherein the part or product of concern is represented by a combination or combinations of these basic elements. Information of these basic elements is selectively extracted from design information, on the basis of which the evaluation scores mentioned above are arithmetically determined.
(3) From the attachability evaluation score and the processability evaluation score, the degrees of ease of attaching and processing (i.e. degrees of attachability and processability) as well as areas requiring improvement are determined for each of the parts.
(4) Since the evaluation can be made on the basis of shapes of parts determined roughly, the evaluation is effected at a relatively earlier stage of designing.
(5) Information concerning the attaching sequences, assembling methods and processing method as required for the evaluation is made available from a CAD processing system.

A preferred embodiment of the manufacturability evaluation method according to the invention may include steps mentioned below.

(a) Each of part attaching operations and/or processing operations is classified into about twenty basic elements, from which the basic element serving as the standard is determined. The basic element selected as the standard is hereinafter referred to as the standard element. As typical examples of the standard element, there may be mentioned a downward part movement and a flat surface processing.
(b) The degrees of relative difficulties of the basic elements relative to the standard are represented by elimination scores (significance scores) which are increased as the time and cost involved in the part attachment and processing increase. Basic elimination scores (basic significance scores) which are so determined as not to vary in dependence on the number of products to be manufactured and the production means as used are allocated to the basic elements, respectively.
(c) In addition to the basic elements, those factors which affect the time and cost involved in the part attachment and processing are derived and defined as supplementary elements.
(d) On the basis of the drawing information supplied from a CAD system, the part attaching sequence, part attachment movement and the part processing operation are automatically represented by combinations of the basic elements and the supplementary elements for each of the parts constituting the product.
(e) For each of the parts, a part attachability evaluation score and a part processability evaluation score are defined by correcting the basic elimination scores imparted to the basic elements by the supplementary elements, respectively, wherein the part attachability evaluation score and the part processability evaluation score are, respectively, so determined as to decrease as functions of increases in the time and cost involved in the part attachment and processing independently from the number of products to be manufactured and the production means as used.

(f) On the basis of the part attachability evaluation scores and the part processability evaluation scores of all the parts, a product assemblability evaluation score and a product processability evaluation score are, respectively, so determined as to decrease as functions of increases in the times and costs involved in assembling and processing the product independently from the number of the products to be manufactured and production means as used.

(g) Estimated values of times and costs expected to be involved in assembling and processing the product under evaluation as well as those expected to be involved in the part attachment and processing are calculated on the basis of the assemblability evaluation scores and the processability evaluation scores of the product under evaluation and constituent parts thereof and those of an existing similar product and parts thereof, the number of the parts, times and costs involved in assembling and processing of the existing product and attachment and processing of the parts of the existing product.

(h) The calculations mentioned above are automatically executed by a computer system including a storage unit for storing the classified basic elements, the basic elimination scores determined in correspondence to the individual basic elements, calculation formula and others, an arithmetic unit for performing arithmetic operations on the basis of the data read out from the storage unit and data inputted externally, a display unit for displaying the input data and results of the evaluation, and others. For all or a part of these units, corresponding units constituting the CAD processing system may be used in a sharing manner for enhancing efficiency of the automatized execution of evaluation.

BRIEF DESCRIPTION OF THE DRAWINGS

Fig. 1 is a conceptual diagram for illustrating a hitherto known design and manufacturability evaluation system together with a flow of processing of design improvement;

Fig. 2 is a block diagram showing a general arrangement of an automatic manufacturability evaluation system according to an embodiment of the invention;

Figs. 3A and 3B are views for illustrating an example of drawing data stored in a CAD database;

Fig. 4 is a flow chart for illustrating a flow of processings involved in the automatic evaluation according to the invention;

Fig. 5 is a view showing examples of rules for screening out assembling sequences, the rules being stored as knowledge information;

Figs. 6A and 6B are views for illustrating, by way of example, how the number of assembling sequences can be reduced through the screening;

Fig. 7 is a view showing a processing method for determining an assembling sequence;

Fig. 8 is a view showing examples of results of automatic evaluation according to the invention;

Figs. 9A and 9B are views for illustrating distributions of manufacturability evaluation scores, respectively;

Fig. 10 is a block diagram showing, by way of example, a general arrangement of a computer system incorporating an automatic manufacturability evaluation system according to an embodiment of the invention;

Fig. 11 is a view for illustrating basic elements and contents thereof;

Fig. 12 shows examples of supplementary elements and contents thereof;

Fig. 13 is a flow chart for illustrating an evaluation processing;

Figs. 14A and 14B are top plan views showing exemplary structures of keyboard of a computer system;

Fig. 15 is a flow chart for illustrating a processing procedure of the product assemblability evaluation executed internally of computer system; and

Fig. 16 is a view showing an example of data outputted as results of evaluation.

DESCRIPTION OF THE PREFERRED EMBODIMENTS

Now, the present invention will be described in detail in conjunction with preferred or exemplary embodiments thereof by referring to the drawings.

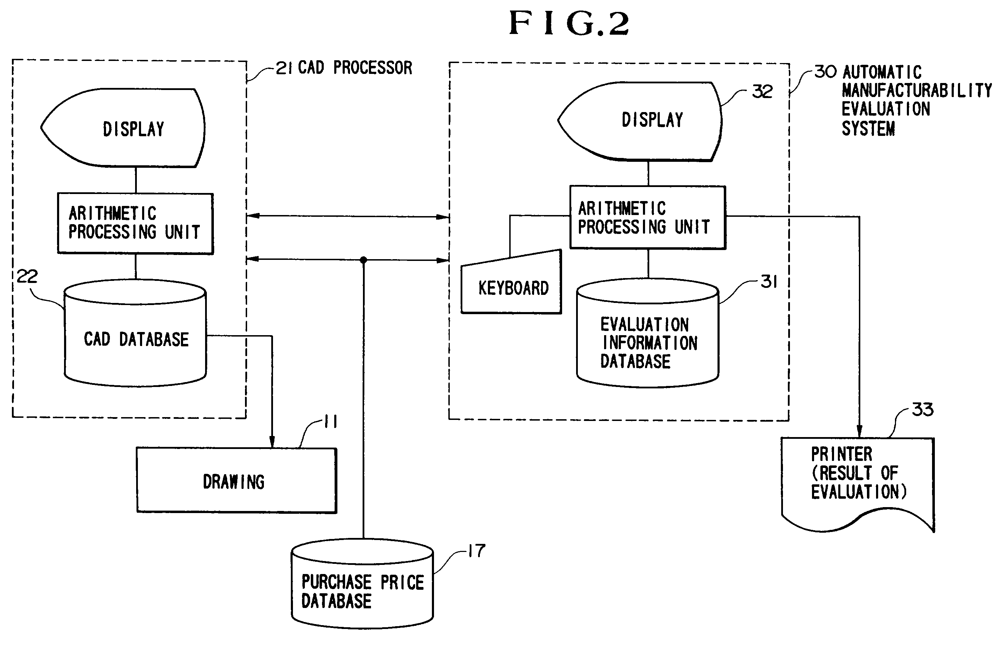

Fig. 2 is a block diagram showing a general arrangement of an automatic evaluation system according to an embodiment of the invention. Referring to the figure, a CAD (Computer-Aided Design) processing system 21 includes a CAD database 22 which is adapted to store drawing data derived from design drawings. With the phrase "drawing data", it is intended to mean data or information concerning parts or constituents of a product or article depicted on a drawing and contains information of part names, geometrical information concering shapes and sizes or dimensions of the parts, attribute information concerning materials of the parts and surface states thereof such as roughness, processed surface state and others, information concerning methods of joining the parts and others. These drawing data including the information mentioned above are stored in the CAD database 22 for all of the parts on a part-by-part basis.

An automatic manufacturability evaluation system 30 for evaluating automatically the ease of manufacturing (i.e. manufacturability) of a given product is supplied with the relevant drawing data from the CAD database 22 and part purchase price information from a purchase price database 17 which stores data or information concerning purchase prices of individual parts, to thereby automatically evaluate quantitatively ease of assembling a product (hereinafter referred to as assemblability), ease of attaching of parts (hereinafter referred to as attachability), ease of processing thereof (hereinafter referred to as processability) and the like, wherein results of the evaluation are displayed on a display unit 32 and/or outputted to a printer 33 and/or stored in an evaluation information database 31. In this conjunction, the drawing data stored in the CAD database 22 and the purchase price data stored in the purchase price database 17 will collectively be referred to as the product design information.

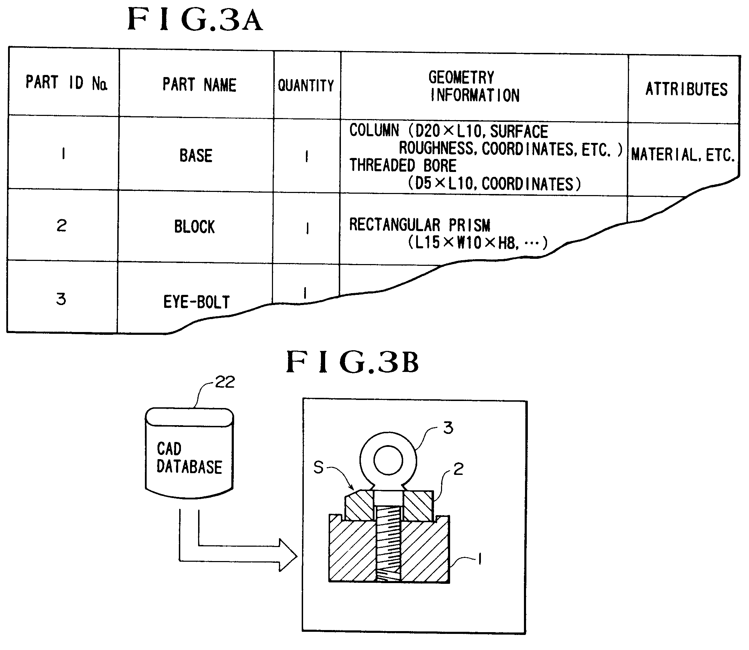

Figs. 3A and 3B are views for illustrating an example of the drawing data stored in the CAD database 17 in an assumed case in which a block 2 is to be tightly attached or secured to a base 1 by means of an eyebolt 3. In that case, the drawing data concerning the base 1 may include, for example, information of the part identification number of "1", part quantity of "1", geometrical information of the part such as "cylindrical column having a diameter of 20 cm and a length of 10 cm", surface roughness information, coordinate information concerning the position at which the part or base 1 is to be located in a finished product, coordinate information concerning the position of a threaded bore formed in the base 1 and others as well as the attribute information concerning the material or the like of the base 1. The drawing data of the block 2 and the eyebolt 3 may be of similar contents.

In an evaluation information database 30 incorporated in the automatic manufacturability evaluation system 20, there are stored for each of basic elements which are involved in attaching a part and/or assembling a product, a symbol representing the basic element, a basic elimination score allocated thereto, a symbol of a supplementary element provided in correspondence to the basic element and a supplementary coefficient imparted thereto together with an evaluation score of the part attachability and/or product assemblability, real value of cost involved in actual manufacturing of the product and others, as will be described in more detail later on.

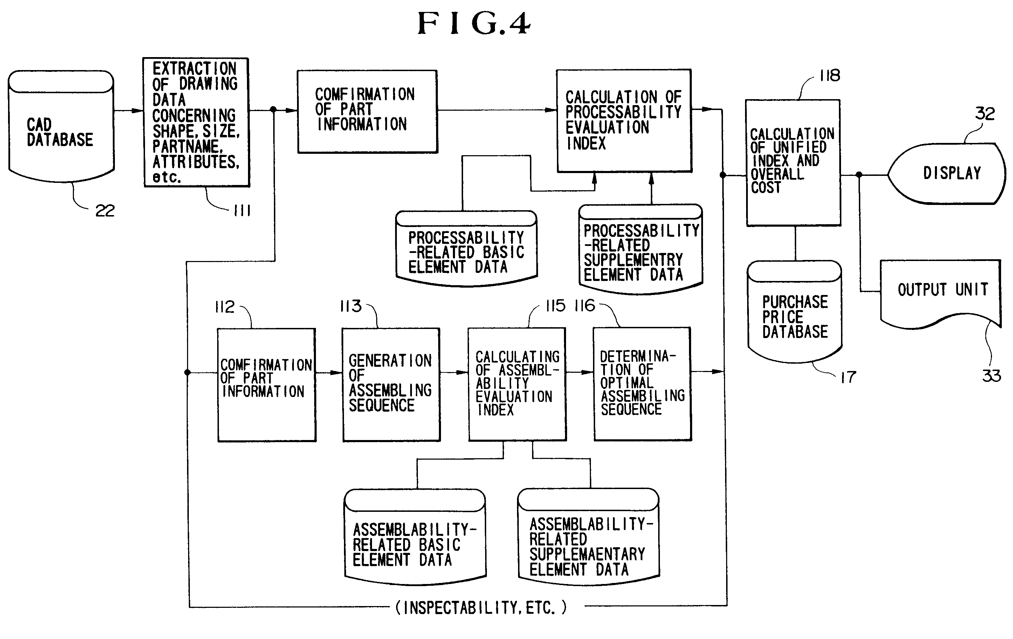

Fig. 4 is a flow chart for illustrating a flow of processings in the automatic manufacturability evaluation.

Referring to the figure, description will be made of the evaluation processings with emphasis being put on the assemblability evaluation. First, in a step 111, the drawing data exemplified by those illustrated in Fig. 3A are read out from the CAD database 22 for all the parts to be subject to the evaluation by using as a key the part name or the part ID number. The outlet of the data fetching step 111 branches to a plurality of processing flows which includes a processability evaluation processing flow shown at a top row in Fig. 4, the assemblability evaluation processing flow shown at an intermediate row and an inspection susceptibility (ease-of-inspection) evaluation processing flow shown at a bottom row.

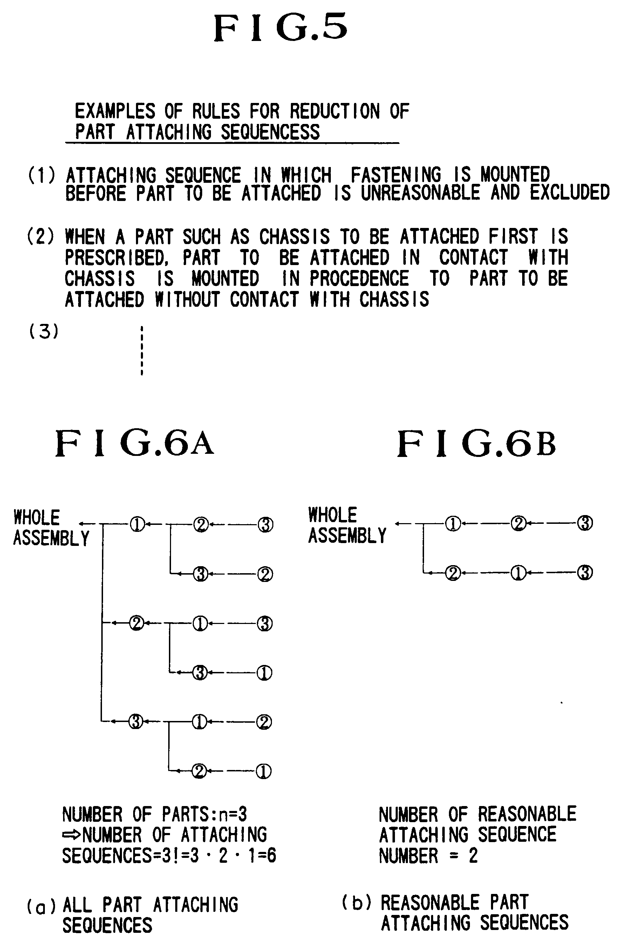

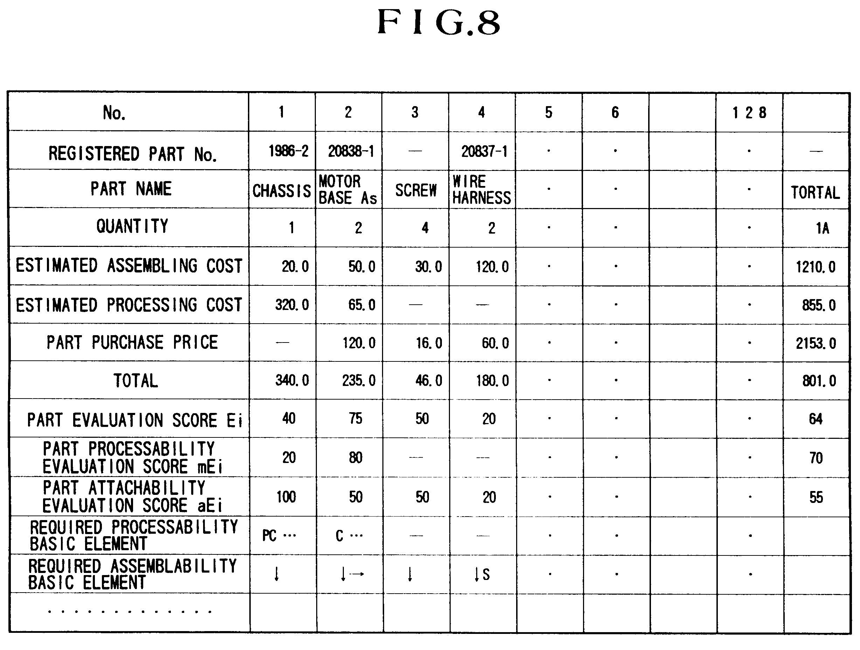

The following description will be directed to the assemblability evaluation processing. In a step 112 shown in Fig. 4, decision is made as to whether all the information concerning the parts to be attached and subjected to the evaluation has been fetched in the step 111 and at the same time it is decided what sorts of the information is to be processed. At that time, if the information required for evaluation is insufficient, a corresponding message is issued to thereby cause the user to load additional design information or to input interactively the requisite information for the evaluation. In a step 113, the part attaching or assembling sequence which is considered reasonable is established. In this conjunction, let's assume, by way of example only, that three parts ①, ② and ③ are to be assembled into a product. In that case, there are conceivable as many as six assembling sequences in total, as is illustrated in Fig. 6A. Under the circumstances, the assembling sequences which are considered to be irrational in the light of elimination rules shown in Fig. 5 and mentioned below are excluded, as a result of which there may be screened out two variants of the assembling sequence such as illustrated in Fig. 6B. In more general terms, in the case of a product or an article which requires $n$ parts for the assembling thereof, there are conceivable a number of possible assembling sequences which corresponds to factorial of $n$. Accordingly, when the assemblability evaluation scores are to be determined for all of these assembling sequences to thereby determine the sequence having gained the highest evaluation score as the most rational assembling method, execution of the processing in the step 115 requires an intolerably enormous amount of time particularly when the product of concern is constituted by several ten or several hundred parts because a large number of the assembling sequences have to be examined, making impractical the processing step 115. For this reason, there are prepared the rules such as shown in Fig. 5 for the purpose of decreasing or screening the assembling sequences so that the number of the assembling sequences which are to undergo the evaluation processing can significantly be decreased to thereby shorten the time taken for arithmetic operations or calculations involved in the evaluation. The assembling sequence reduction rules such as exemplified by those illustrated in Fig. 5 may be stored as knowledges of so-called production rules, as is conventionally adopted in the field of the artificial intelligence technology, wherein the rules are referred to for eliminating or excluding the assembling sequences which contradict the rules in respect to the conditions concerning the properties of the constituent parts, relations to the other part upon joining and the like. As a result of this, only a limited number of the assembling sequences which are to undergo the evaluation are selectively determined in a step 113 shown in Fig. 4.

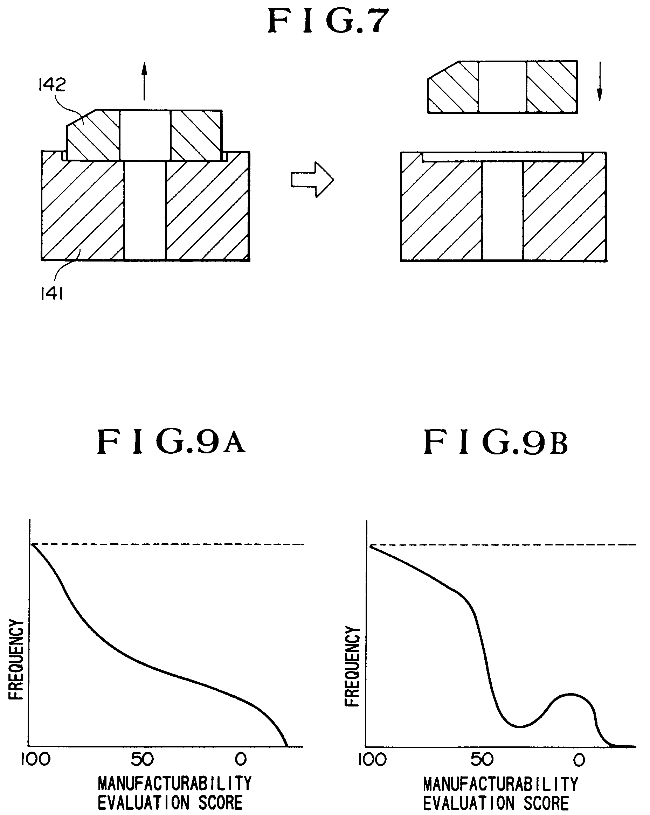

In succession to the step of selecting the assembling sequences which can ensure high rationality, each of the assembling sequences is automatically evaluated by examining the processes or operations involved in attaching the parts on a part-by-part basis in such a manner as illustrated in Fig. 7. To this end, advantage is taken of the fact that a part attaching procedure is essentially equivalent to the reversal of a corresponding part detaching procedure. More specifically, in the case of the example illustrated in Fig. 7, automatic evaluation for the attaching operation of an i-th part 142 may be realized without incurring any problem in practical applications by finding out from the drawing data supplied from the CAD processor and showing the state in which the parts up to the i-th part inclusive have been attached such movement of the i-th part which allows that part to be detached without interfering with other part 141 (a subassembly constituted by the constituent parts up to the (i - 1)-th part inclusive, which is referred to as the mounted part), whereon movement of the i-th part reverse to that involved in the detaching operation is regarded to be the movement of the i-th part involved in the attaching operation. In this conjunction, it should be added that some algorithm is to be additionally prepared for coping with some exceptional structure, although description of such algorithm is omitted herein.

In conjunction with estimation of possible detaching movement of the i-th part 142 mentioned above, it is noted that when the i-th part 141 is assumed to be detached at random from the mounted part 142 with a view to checking interference between these parts, an enormous amount of time will be taken because of necessity of examining a large number of the possible detaching movements of the i-th part, rendering the checking procedure impractical. Under the circumstances, in order to automatically and rationally determine the detaching movements of the part with possible minimum arithmetic facilities, it is taught according to the invention to carry out the searching processes for finding out the movement of the part which allows detachment thereof without exerting interference to the other part in such sequence that basic elements (operations) involved in attaching the part are validated in the order of small to large elimination scores allocated to the basic elements, respectively, while manipulating the part in the direction reverse to that for attachment thereof, as will be described in more detail in conjunction with the assemblability evaluation method.

In a step 115, basic element data (basic elimination score) both concerning the assemblability evaluation and supplementary element data (supplementary coefficient) are read out from an evaluation information database 31 for each of the attachment methods decreased in number through the process described above, whereon attachability evaluation index is calculated for each of the attachment processes. The evaluation method to this end will be described later on. Subsequently, in a step 116, the attachmenmt process having the highest attachability evaluation index value as calculated is decided to be the optimal attachment process.

As will be appreciated from the foregoing, the most rational assembling sequence can be determined for a product composed of n parts through the steps mentioned below.

(1) Possible assembling sequences are sorted out by consulting the elimination rules (Fig. 5) from a number of the assembling sequences which is factorial of n.
(2) For the assembling sequences thus selected, operations or methods which allow the parts to be detached from a finished product without interfering with the other parts sequentially starting from the part attached finally are searched, whereon the detaching operations are arrayed in the descending order of the assemblability elimination scores of operations involved in assembling the parts which are performed with movements of the parts reverse to those involved in the detaching operations.
(3) For the disassembling sequences as determined which permit the detachment of the part attached finally, the assemblability evaluation scores are determined for the assembling sequences which are reverse to the disassembling sequences.
(4) The assemblings sequence gaining the highest assemblability evaluation score is decided to be the most rational assembling sequence or operation.

At this junction, it should be mentioned that execution of the steps (1) to (4) is not limited to the order mentioned above but may be effected in different orders.

In the processability evaluation, there is no room for the concept of the assembling sequence to play a role. Except for this, the processability evaluation can be effectuated similarly to the assemblability evaluation, as is illustrated in Fig. 4 at the top row. More specifically, there is selected one of the basic elements for the processability evaluation such as shown in Fig. 2 of U.S. Patent Application Serial No. 726,997 mentioned in the cross-reference which bears the greatest similarity to the drawing data derived from the drawing 11 (Fig. 2). Since the basic elements for the processability evaluation are determined on the basis of the geometrical factors or shapes of the parts, automatic extraction of the basic elements can easily be performed on the basis of the part shape data contained in the drawing data. Furthermore, the supplementary elements for the processability evaluation can easily be determined automatically on the basis of the attribute information contained in the drawing data and can be expressed in such a manner as is illustrated in Fig. 3 of aforementioned U.S. Patent Application Serial No. 726,997. Consequently, the processability evaluation index can equally be determined automatically by the method disclosed in the abovementioned U.S. Patent Application.

In a step 118, all the evaluation indexes including the assemblability evaluation index, the processability evaluation index, the inspection-susceptibility index are synthesized to thereby determine a synthetic evaluation index, whereon an overall cost is calculated on the basis of the synthetic evaluation index and the purchase price data of the parts subjected to the evaluation and stored in the purchase price database, the results of which are displayed on the display unit 32 and/or outputted to an output unit 33.

The manufacturability evaluation system according to the instant embodiment of the invention is equipped with the purchase price database 17, as shown in Fig. 4. Thus, it is possible to calculate the overall cost which includes not only the estimated work costs such as involved in the processing or machining and the assembling but also the part purchase prices, delivery period, etc.. This in turn means that the manufacturability evaluation can be made synthetically, providing a benefit which the conventional evaluation system can not enjoy. In the case of the illustrated embodiment, the purchase price data is read out from the database 17 for determining the overall cost at a step 118. It should however be appreciated that in place of using the database 17, such arrangement may equally be adopted in which the evaluation system computer issues a query concerning the purchase prices to a system installed in a part purchase division, wherein the data supplied from the latter is utilized as the purchase price data.

Now, description will be directed to a system for automatic designation of areas requiring improvement or automatic indication of the contents or items to be improved and automatic presentation of typical improvement proposals for reference in devising improvement plans.

As the results of the evaluation, there are displayed en bloc the manufacturability evaluation score, processability evaluation score, assemblability evaluation score, estimated processing (machining) cost, estimated assembling cost, part purchase prices for a whole product of concern together with the manufacturability evaluation score, processability evaluation score, assemblability evaluation score, estimated processing (machining) cost, estimated assembling cost and the purchase cost for each of the parts constituting the product as well as the basic elements and the supplementary elements resulting from the analysis performed on each of the individual parts, as is illustrated in Fig. 8 by way of example. On the basis of these results, the automatic designation of the area(s) to be improved or automatic indication of the content(s) or item(s) requiring improvement are effected through procedure described below.

(1) Decision is first made as to whether distribution of the part manufacturability evaluation scores is low on an average (as illustrated in Fig. 9A) or only a few of the parts have the respective part manufacturability evaluation scores which are remarkably low (as illustrated in Fig. 9B). In the former case, comprehensive improvement is necessary, while in the latter case, improvement may have to be centered on those parts of the low evaluation scores.

(2) By extracting the parts of the lower evaluation score, e.g. the worst ten parts, the automatic indication of the parts to be improved can be accomplished. By way of example, referring to the table shown in Fig. 8, a chassis having the evaluation score of 40 points and wire harness having the evaluation score of 20 points listed in the column labeled "part evaluation score $E_i$" are indicated as the parts to be improved.

(3) For the parts indicated to be improved in the abovementioned procedure step (2), decision is made as to which of the processability evaluation score or the assemblability evaluation score is lower, whereon decision is made that improvement is necessary for the processability or assemblability of lower evaluation score which is below a predetermined level (e.g. below 50 points). In the case of the example illustrated in Fig. 8, the chassis has the part assemblability evaluation score $_aE_i$ of 100 points and the part processability evaluation score $_nE_i$ of 20 points. Accordingly, it is decided that the chassis is to be improved in respect to the processing thereof.

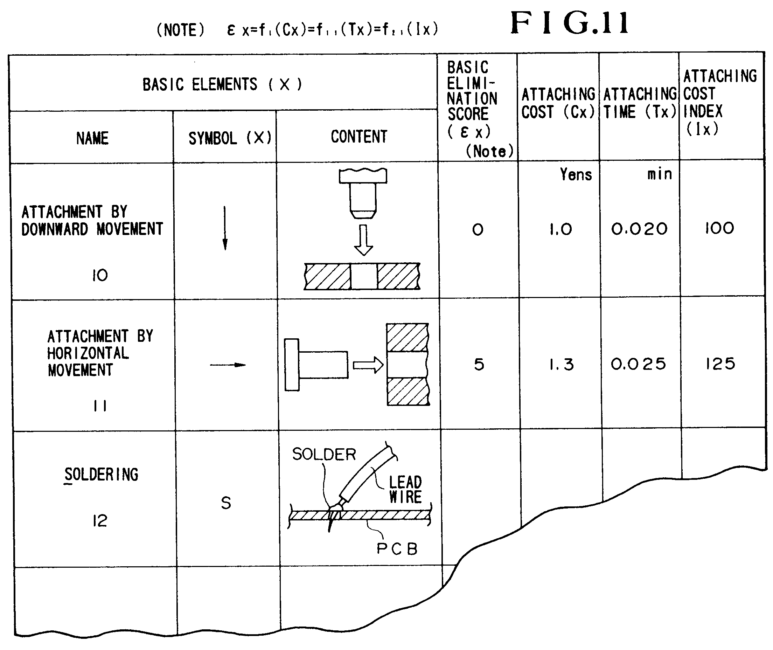

(4) For the part for which improvement is required in respect to either the processing or the assembling which has the lower evaluation score, decision is made as to which of the basic element or the supplementary element contributes to lowering the evaluation score or as to whether the low evaluation score is ascribable to a large number of the basic elements or inclusion of the basic elements having extremely large elimination scores (such as "cylinder surface: C" shown in Fig. 2 of U.S. Patent Application No. 276,997 and "soldering: S" shown in Fig. 11 of the above application).

(5) When the basic element having the large elimination scores is included, clue to the improvement is given by identifying such basic element, because improvement can be achieved by excluding that basic element.

Through the procedure described above, the area(s) to be improved and the reason(s) therefor as well as a guideline indicating how to proceed with the improvement can be presented.

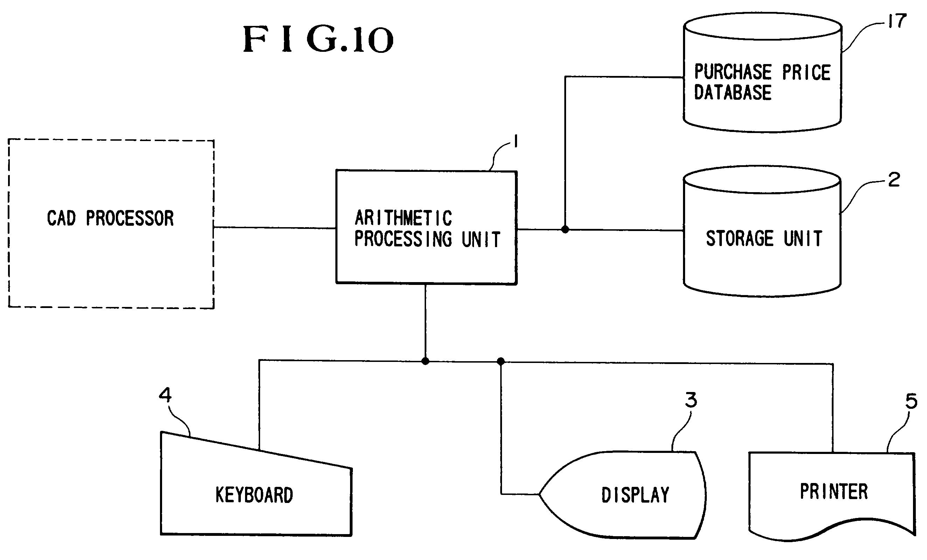

Fig. 10 is a block diagram showing, by way of example, a general arrangement of a computer system for realizing the automatic assemblability evaluation system and the automatic manufacturability evaluation system. Although the automatic evaluations according to the invention can be carried out by using a general-purpose type computer system in this manner, it is also possible to carry out the different evaluation processings by using dedicated microcomputers or hardware, respectively. Referring to Fig. 10, the evaluation computer system comprises as major components an arithmetic unit 1 for performing arithmetic operations or calculations, a storage unit 2 for storing programs, a variety of basic data as well as input data and the results of the arithmetic operations, a display unit 3 for displaying data inputted manually or transferred from the CAD processor system and the results of the arithmetic operations, an input unit 4 such as a keyboard, mouse or the like for enabling data input by operator, a printer 5 for outputting the results of the arithmetic operations and others. Although the individual units enumerated above are depicted as independent units, it will readily be understood that functions of some or all of these units may be implemented by those constituting the CAD processor system in a sharing manner or some of the units may directly be connected to the CAD processing system via a cable. In other words, the system configuration shown in Fig. 10 is only for the illustrative purpose and various modifications thereof will readily occur to those having ordinary knowledge in this field without departing from the spirit and scope of the invention.

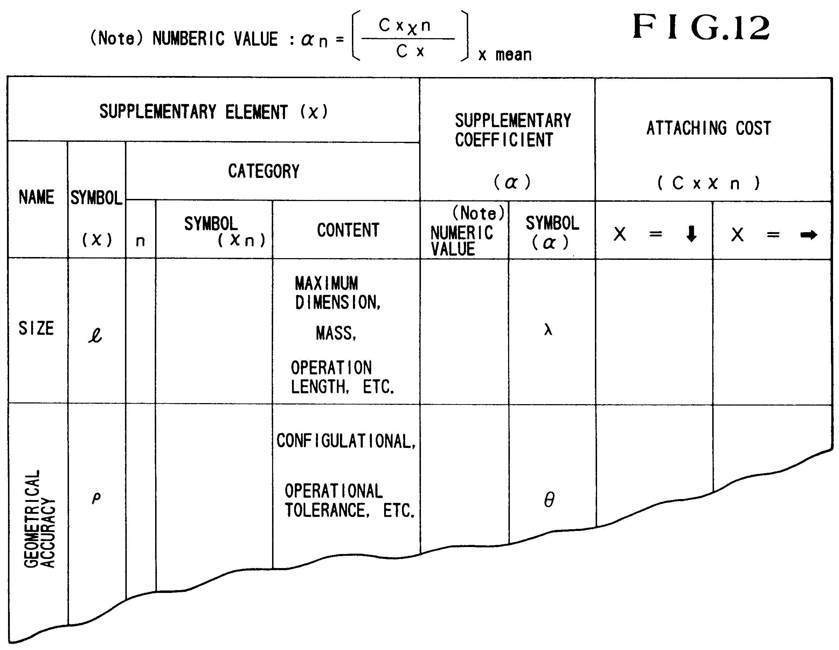

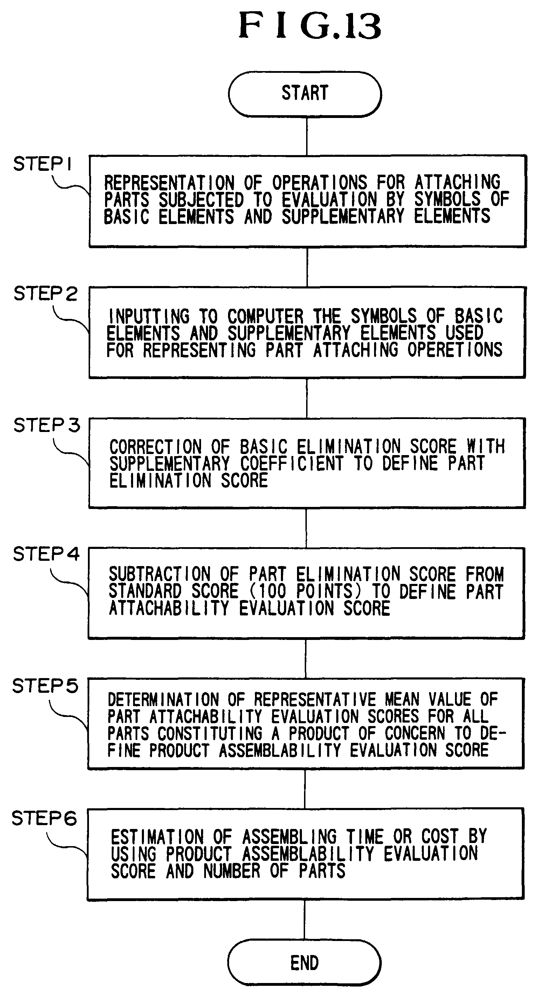

Next, description will be directed to a structure of software for the assemblability evaluation method briefed hereinbefore in conjunction with the step 115 shown in Fig. 4, which software is adapted to run on the hardware system such as shown in Fig. 10. Fig. 11 is a view for illustrating a variety of basic data stored in the storage unit 2. As the basic data, there may be mentioned basic elements and basic element symbols X representing the basic elements, basic elimination scores $\varepsilon_x$ assigned to the basic elements, respectively, supplementary elements (which will be described hereinafter by reference to Fig. 12) and symbols $\chi$ representing these supplementary elements and supplementary coefficients $\alpha$ imparted to these supplementary elements and others. The assemblability evaluation software is so programmed as to execute the processings included in the evaluation process (described hereinafter by reference to Fig. 13), which processings include input processing of the basic element data $X_i$ and identifiers $N_i$ thereof on a part-by-part basis, calculation for correcting the basic elimination score $\varepsilon_{ij}$ with the supplementary coefficient $\alpha$ for each of the part attaching sequences j, calculation of the part assemblability evaluation score $_aE_i$ based on the sum of the corrected elimination scores, calculations of the product assemblability evaluation score E, the assembling time (i.e. time taken for the assembling) T and the assembling cost (i.e. cost involved in the assembling) C on the basis of the part assemblability evaluation scores of all the parts, displaying of the results of the calculations mentioned above on the display unit 3 and outputting of the results of calculations through the printer 5. The calculations involved in the assemblability evaluation mentioned above are described in detail in U.S. Patent Applications Serial Nos. 654,236 and 726,997 assigned to the assignee of the present application, the disclosures of which are herein incorporated by reference, and will be briefed below.

With regard to the basic elimination score $\varepsilon_x$, the attaching operation which is most easy to carry out is taken as a standard element $X_0$, and the basic elimination score $\varepsilon_x$ which is assigned to the standard element $X_0$ is set to "0" (zero). For the other basic elements X, the elimination scores $\varepsilon_x$ to be assigned thereto are increased in dependence on the degrees of difficulty in effectuating these other basic elements when compared with that of the standard element $X_0$. More specifically, in consideration of the imposed production conditions such as the number of products to be manufactured and the production means such as the types of assembling apparatuses or tools as used, the basic elimination scores $\varepsilon_x$ given to the other basic elements X than standard element $X_0$ are determined to increase from "0" (zero) as the attachment costs $C_x$ of the other basic elements X increase beyond the attachment cost $C_{xo}$ of the standard element $X_0$ under the same production conditions as that for the standard element $X_0$. This relation may be expressed by a functional form of $\varepsilon_x = f_1(C_x)$.

As can be seen in Fig. 11, the attachment cost (i.e. cost involved in attaching or assembling a part) $C_x$ may be replaced by the attachment time $T_x$ or the index $I_x$ thereof or a product of the attachment time $T_x$ and a shop allotment rate A. Accordingly, the above relation may be given in more general form as follows:

$$\varepsilon_x = f_1(C_x) = f_{11}(T_x) = f_{21}(I_x) \qquad (1)$$

Next, the supplementary elements $\chi$ and supplementary coefficient $\alpha$ will be considered by reference to Fig. 12. As the supplementary elements $\chi$, there may be mentioned material $\underline{m}$ size $\underline{l}$, finishing accuracy $\underline{a}$ and others.

On the other hand, for each of the supplementary elements ($\underline{m}$, $\underline{l}$, $\underline{a}$ ...), the state thereof is divided into $\underline{n}$ substates (where $\underline{n}$ represents an integer greater than or equal to 1), and the supplementary standards ($m_o$, $l_o$, $a_o$, ...) are defined for the supplementary elements, respectively. These supplementary elements can be derived from the information available from the drawing or product or the part and represent items which affect the ease of attachment of the part (i.e. the part attachability) in addition to the basic elements described above. The supplementary coefficient $\alpha$ is a supplementary index representing the degree of influence exerted to the part attachability by the supplementary element. The supplementary coefficient $\alpha$ is so determined that when the attachment cost involved in the attachment for the supplementary standard is "1" (one), the supplementary coefficient $\alpha_n$ for each of the states resulting from the division of the supplementary element by $\underline{n}$ increases from "1" in proportion to the increase in the attachment cost $C_{x\chi n}$ for each state beyond the attachment cost ($C_{x\chi o} = C_x$) involved in the attachment for the supplementary standard under the same production conditions. This relation can be expressed by

$$\alpha_n = [\frac{C_{x\chi n}}{C_x}]_{X\ mean} \qquad (2)$$

where the suffix "X mean" affixed to the right-hand bracket in the above expression indicates that the supplementary coefficient $\alpha_n$ indicates a mean value of the values obtained from the calculations for a plurality of the basic elements X.

At this juncture, it should also be mentioned that the attachment costs $C_{x\chi n}$, $C_{x\chi o}$ may be replaced by the attachment times $T_{x\chi n}$, $T_{x\chi o}$ or indexes $I_{x\chi n}$, $I_{x\chi o}$ thereof or products of $T_{x\chi n}$, $T_{x\chi o}$ and the shop allotment ratio A substantially to the same effect, as described hereinbefore in conjunction with the basic elimination score $\varepsilon$.

Referring to Fig. 11, there are shown in a first column some exemplary basic elements X resulting from classification of attachment operations (i.e. operations for attaching parts). A first example 10 of the basic element is attachment of a part by moving it downwardly (i.e. by downward movement), a second example 11 is attachment of a part by horizontal movement thereof, and a third example 12 is a soldering operation. Of course, other types attachment operations are conceivable as the basic elements X, although not shown. These basic elements can be extracted from the drawing information and/or design information available from the CAD system while inputting interactively some information, if necessary, and represent distinctively the movements, joining or mounting methods of parts upon attachments thereof in manufacturing a product constituted by these parts.

Illustrated in a third column of the table shown in Fig. 11 are contents of the basic elements, whose number may be in a range of several to several tens. As the number of the basic elements increases, the accuracy of analysis and evaluation is enhanced, although difficulty increases more or less in making use of the basic elements in the evaluation. On the contrary, as the number of the basic elements decreases, the evaluation process can certainly be simplified, correspondingly. However, accuracy of the evaluation is degraded correspondingly. It has empirically been established that in the case of the manual analysis and evaluation, the number of the basic element should preferably be on the order of twenty, while in the case of the automatic evaluation based on the information available from the CAD system, the evaluation processing can be performed without encountering any noticeable difficulty in most of practical applications even when the number of the basic elements is greater than twenty.

The basic element symbols allocated to the basic elements, respectively, are shown in a second column of the table of Fig. 11. The basic element symbols are so determined that the corresponding basic elements can associatively be understood from the symbols. For example, the downward movement can be represented by a downward arrow "↓" with the soldering being represented by "S". In a fourth column of the table shown in Fig. 11, there are entered exemplary values of the basic elimination scores assigned to the basic elements, respectively. In the case of the instant embodiment, the downward movement which is most easy to carry out for attachment of a part is taken as the standard for the basic element and assigned with the basic elimination score of "0" (zero), while for the other basic elements, the basic elimination scores $\varepsilon_x$ increases as the difficulty in attaching or mounting the corresponding parts increases when compared with that of the standard basic element. In other words, the basic elimination scores $\varepsilon_x$ for the other basic elements than the standard are so determined as to increase as the corresponding part attachment time $T_x$, for example, increases under the same production conditions, e.g. same number of products, same production means and same operation mode, i.e. manual or automatic, as is shown in a sixth column of the table of Fig. 11. Of course, the basic elimination score $\varepsilon_x$ may be determined on the basis of the attachment cost instead of the attachment time. Alternatively, in the case of a process implemented by using a robot, the elimination score can be determined on the basis of the length of the path along which the robot is moved in place of the part attachment time.

Fig. 12 shows examples of the supplementary element. As the items of the supplementary elements, there may be mentioned sizes of parts, attachment accuracies and others. These supplementary elements can basically be extracted only from the drawing data or the design information supplied from the CAD processing system (with inputting interactively additional information as required) and represent in terms of numerical values the items which exert influence to the part attachability in addition to the basic elements. It should however be added that the supplementary elements are insusceptible to change in dependence on the production conditions such as the number of products and the production means. As the method for correction, there may be mentioned a first method of calculating the part elimination score by multiplying the basic elimination score $\varepsilon_x$ with the supplementary coefficient $\underline{\alpha}$ mentioned above for each part attachment operation, a second method of multiplying a value resulting from subtraction of a total sum of elimination scores for the parts ($\Sigma\varepsilon_{xi}$) from the standard score point (100 points) with the supplementary coefficients and any other methods. In any case, the part attachability evaluation score $E_i$ calculated finally is to be so determined that it always assumes a high value whennever the part is easy to attach or whennever the -attachment time taken for attaching the part is short.

According to the first mentioned method, the part attachability evaluation score $E_i$ is given by

$$E_i = 100 - f(\Sigma \varepsilon_{xi} \cdot \alpha_i) \qquad (3)$$

while according to the second method, it is given by

$$E_i = 100 - f\{(\Sigma \varepsilon_{xi}) \cdot \alpha\} \qquad (4)$$

As will be appreciated form the above description, the part attachability evaluation score $E_i$ is an index which represents the quality of attachability of the part (i.e. ease of attachment of part). Further, the part attachability evaluation score $E_i$ of a part can be calculated on the basis of a sum of the basic elimination scores $\varepsilon_x$ each of which in turn is determined on the basis of the attachment time $T_x$ for each of the basic elements. In this manner, the part attachability evaluation score $E_i$ bears a predetermined functional relation to the part attachment time $T_i$, i.e. $E_i = f(T_i)$. Accordingly, it is possible to calculate the part attachment time $T_i$ and the part attachment cost $C_i$ (i.e. time and cost taken for attaching the part) on the basis of the part attachability evaluation score $E_i$. To say in another way, it equally applies valid that $T_i = f_1(E_i)$ and $C_i = f_2(E_i)$.

After the part attachability evaluation score $E_i$, the attachment time $T_i$ and the attachment cost $C_i$ have be determined for all the parts, then the assembling time T, the assembling cost C and the assemblability evaluation score E are determined on the basis of mean values of $T_i$, $C_i$ and $E_i$. Namely, from

$$T = \Sigma T_i = \Sigma[f_1(E_i)] \qquad (5)$$

$$C = \Sigma C_i = \Sigma[f_2(E_i)] \qquad (6)$$

the product assemblability evaluation score is determined as follows.

$$E = f_3(C) = f_4(T) = f_5(\Sigma E_i) \qquad (7)$$

Thus, the product assemblability evaluation score E represents the degree of ease of assembling a product as a whole in contrast to the part attachability evaluation score $E_i$ which is an index representing the degree of ease of attaching a part i of the product.

In the foregoing, the first embodiment of the invention directed to the automatic evaluation system has been described. Next, description will be made of a semi-automatic evaluation system or CAD-linked automatic evaluation system as well as a semi-automatic evaluation method which requires intervention of operator in effectuating the evaluation according to a second embodiment of the invention.

Fig. 13 is a flow chart for illustrating processings executed by the computer system shown in Fig. 10. In the case of the CAD-linked semi-automatic evaluation system, most of these processings are automatically executed. Referring to Fig. 13, in the step 1, the attachment operation of a part to be evaluated is represented by the symbols of the basic element and the supplementary element. Unless the element symbols fitting the operation precisely are available, the element symbol representing the operation most approximately or closely are selectively determined by the operator. By way of example, when a part is to be moved in the direction within ±5° relative to the vertical, the element symbol representing the vertical movement may be selected. Further, when a brazing is included as a basic element, the symbol representing the soldering may be selected. The selection of these element symbols is effected manually in the case of the semi-automatic evaluation system. However, in the case of the CAD-linked automatic system, these element symbols can be determined automatically.

In a step 2 shown in Fig. 13, the symbols of the basic elements and the supplementary elements are manually inputted on a part-by-part basis through the keyboard. In the case of the CAD-linked automatic evaluation system, these element symbols are automatically inputted to the evaluation system by a corresponding load program.

In a step 3, the basic elimination score $\varepsilon_{xi}$ is corrected with the supplementary coefficient $\alpha_i$ or $\alpha$ to thereby determine the part elimination score ${}_me_i$ in accordance with the expression (3) or (4). More specifically, the part elimination score ${}_me_i$ is determined in accordance with

$$_me_i = g(\alpha_i, \varepsilon_{xi}) \qquad (8)$$

Next, in a step 4, the part elimination score ${}_me_i$ is subtracted from the standard score (of 100 points), the result of which is determined as the part attachability evaluation score ${}_aE_i$. Namely,

$$_aE_i = 100 - {}_me_i \qquad (9)$$

In a step 5, a representative mean value of the part attachability evaluation scores is determined for all the parts constituting a product of concern and defined as the product assemblability evaluation score E. To this end, a sum $\Sigma_aE_i$ of the part attachability evaluation scores ${}_aE_i$ of the individual parts is divided by a total number N of all the parts. Namely,

$$E = \frac{\Sigma_aE_i}{N} \qquad (10)$$

The assemblability evaluation score E determined for the product as a whole in this manner can be considered to indicate that the product has a same degree of assemblability (i.e. degree of ease of assembling) as an assembly or aggregation of the parts having the part attachability evaluation score of "E" on an average.

In a step 6, the product assembling time T or cost C (i.e. time or cost required for assembling the product) is estimated on the basis of the product assemblability evaluation score E and the number N of the parts in accordance with the expression (5) or (6).

By executing the processings for all the parts constituting the product in the manner described above, the computer calculates automatically all or desired one of the assemblability evaluation score, the assembling time and the assembling cost, the result of which can be displayed on the display unit and/or outputted through the printer when it is required. In the CAD-linked automatic evaluation system according to the instant embodiment, the result mentioned above can be displayed and/or printed out and/or stored in the storage unit. In the latter case, the data thus stored can be utilized for a process path scheduling for a robot (automatic generation of movement paths of the robot) required for assembling the product as designed or utilized for a manufacturing facility scheduling (e.g. as to how many machines or tools are required in what layout) as well.

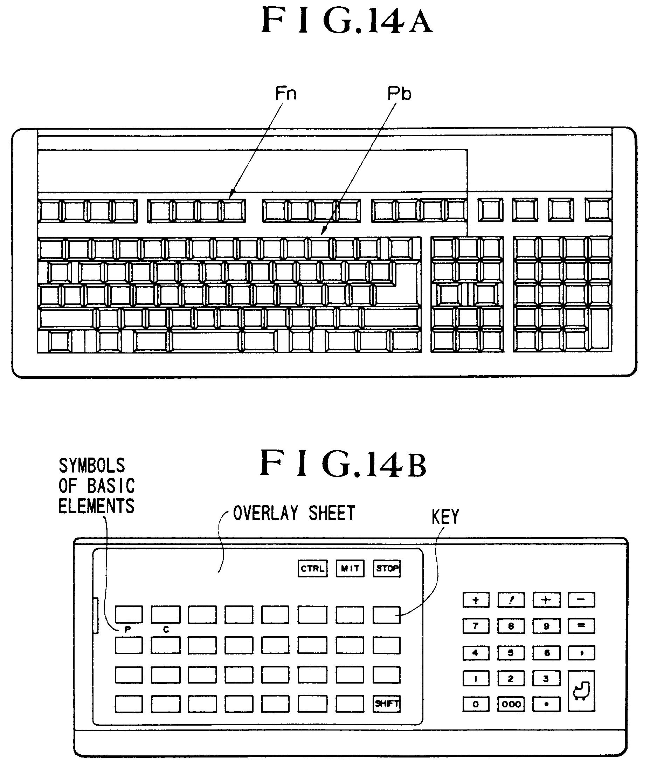

In conjunction with the inputting of the basic elements and the supplementary elements as input data on the part-by-part basis, as described above, it is preferred to assign the symbols of the basic elements and the supplementary elements to individual keys of the keyboard, respectively, for facilitating the manual inputting or correction of result of the automatic analysis of the CAD-linked system. In Figs. 14A and 14B, examples of such keyboard are illustrated. In that case, the keys should preferably be assigned with the symbols such that the characters imprinted thereon can facilitate association with the symbols. By way of example, the symbols of the basic elements for which the alphabetic letters are used as they are, as shown in Fig. 11, may be assigned to the keys of the same alphabetic letters, respectively, while the basic elements for which other symbols than the alphabetic letters are used may preferably be assigned to the function keys. An example of such keyboard configuration is disclosed in U.S. Applications Serial Nos. 726,997 and 654,236 mentioned hereinbefore. Alternatively, a sheet known as an overlay sheet may be laid over the keyboard, and relevant symbols may be written on the sheet at locations close to the individual key so that the symbols of the basic elements assigned to the keys can immediately be understood. As another alternative, a list of the element symbols may be generated on a display screen of a CAD display unit, wherein the element symbol as desired may be selected by designating with a cursor by means of a pointing device or the like. In this manner, there may occur various methods for inputting the symbols of the basic elements, and any suitable one may be adopted to this end. Parenthetically, the numerical data may well be inputted by using the ten-keys. In the case of the CAD-linked automatic evaluation system, the methods mentioned above may be adopted for correcting manually a result of the analysis performed by the system.

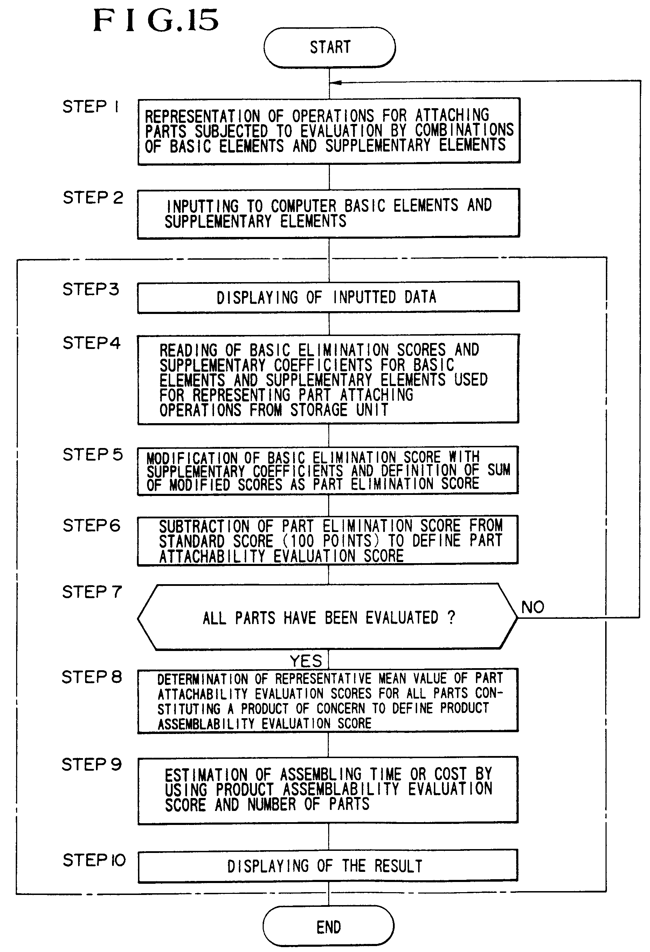

Fig. 15 is a flow chart for illustrating a processing procedure of the product assemblability evaluation based on the basic elements and the supplementary elements.

Referring to Fig. 15, in a step 1, the parts to be evaluated and represented by combinations of the basic elements are the supplementary elements.

In a step 2, basic elements and supplementary elements are inputted to the computer system on a part-by-part basis. Although the processings in the steps 1 and 2 should preferably be executed automatically, they may be performed manually by operator.

The processings in the succeeding steps mentioned below are carried out internally of the computer system.

In the step 3, data inputted through the keyboard are displayed on the display unit.

In the step 4, the basic elimination scores and the supplementary coefficients corresponding to the basic elements and the supplementary elements used for representing the part to be evaluated are read out from the evaluation information database 31.

In the step 5, the basic elimination scores read out in the preceding step are corrected by the supplementary coefficients, whereon a sum of the results of the correction is defined as representing the part elimination score. As can be seen in Fig. 12, there exist usually a plurality of supplementary coefficients, which are corrected through multiplication of the corresponding basic elimination scores.

In the step 6, the part elimination score is subtracted from the standard score (usually a perfect score of 100 points), the result of which is defined as the part attachability evaluation score. The part attachability evaluation score thus calculated is stored in the database 31.

In the step 7, it is checked whether or not the processings mentioned above have been performed for all the parts of concern. If the answer of this Step 7 is negative (NO), the abovementioned processings are repeated until all the parts have undergone the processings.

In the step 8, a mean value of the part attachability evaluation scores of all the parts constituting a product of concern is determined and corrected, if necessary, or alternatively a median value of the part attachability evaluation scores is arithmetically determined to be defined as the product assemblability evaluation score representing the assemblability (i.e. ease of assembling) of the product as a whole. Thus, it can readily be decided how many evaluation scores the parts constituting the product of concern have on an average, which in turn makes it possible to evaluate the product thus assembled comparatively with other products having a similar structure.

In the step 9, the assembling time and/or assembling cost of the product of concern is estimated on the basis of the assemblability evaluation score of the product and the number of parts or alternatively the assemblability evaluation score, the number of constituent parts, assembling time and assembling cost of the similar product in accordance with the expression (5) and/or expression (6) mentioned hereinbefore. Additionally, data of other factors which may have influence to the assembling cost such as the number of products to be manufactured, shop cost per hour and the like may previously be inputted for correcting the calculated assembling cost. Since the assemblability evaluation score is arithmetically determined on the basis of the basic elimination scores associated with the part attachment time or the part attachment cost, the product assemblability evaluation score is intrinsically a value which is related to the mean attachment cost of all the parts constituting the product. Accordingly, the product assembling cost can be determined on the basis of the mean part attachment cost and the number of the parts and by correcting the result in consideration of the number of products to be manufactured and the shop cost per hour. Parenthetically, the assembling time can be obtained by dividing the assembling cost with the shop cost per hour.

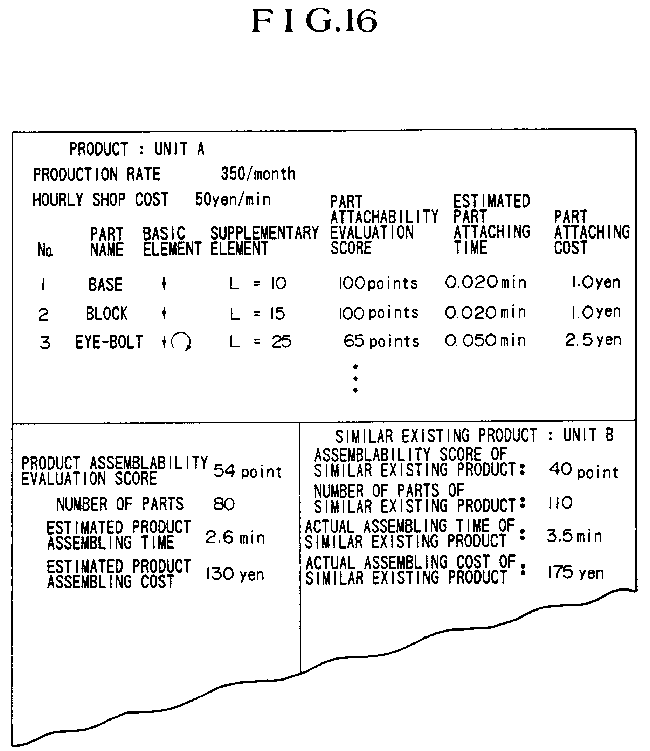

In the step 10, the results of the processings described above are displayed and/or outputted, whereupon the evaluation processing comes to an end. Fig. 16 shows an example of data as outputted. In the case of this example, the evaluation data are assumed to be independently outputted through the printer. On the other hand, in the case of the CAD-linked automatic evaluation system, all or a part of the output information may be displayed or printed on the drawing created by the CAD system.

In the case of the embodiment described above, the assemblability evaluation scores are determined by adopting a low-point method of scoring (i.e. method of reducing or substracting the score) from the standard score of "100". However, various modifications of this scoring method are conceivable such as those exemplified by a method of determining the assemblability evaluation score by using the low-point method of scoring from the standard score of "0" (zero), method of determining the assemblability evaluation score according to a high-point method of scoring from the standard score of "0", a method of determining the assemblability evaluation score by the high-point method on the basis of the standard score of "100" and others. These methods can be realized in the substantially same manner as that described hereinbefore.

Turning back to Fig. 4, in the assembling sequence determining steps 113, 115 and 116, the assemblability evaluation method described above is made use of. More specifically, in the assembling sequence generating step 113 shown in Fig. 4, the part attaching operations are classified into the basic elements related to the movements of the parts, as illustrated in Fig. 11, whereon the basic elements are arrayed in the sequenced order, starting from the smallest basic elimination score $\varepsilon_{ij}$ such as exemplified by an orderly array of the first basic element of the downward movement (which is most simple), the second basic element of horizontal movement toward a mounted part and so forth. Subsequently, the parts $i$ to be attached are assumed to be removed or detached through the movements reverse to those involved in the attachment in the abovementioned order, e.g. the upward movement firstly, the horizontal movement away from the mounted part secondly, and so forth, to thereby check whether the part to be attached interferes with the attached or mounted part. This check operation can be realized by making use of the part interference check function incorporated in the associated CAD system. When interference is observed, the relevant attaching movement is excluded. This process is executed sequentially until the basic element which does not interfere with the mounted part is found. In the case of the example illustrated in Fig. 17, the part 142 to be attached can be detached by moving that part 142 in the upward direction without interfering the mounted part. (Horizontal movement of the part 142 is accompanied with interference, increasing significantly the elimination score.) Accordingly, it is decided that the basic element to be assigned to the part 142 is the movement represented by the symbol "↓". At this juncture, it should be mentioned that when the elimination score of the basic element representing a single movement is greater than that of the basic element representing double movements (such as exemplified by "↓ ↷" shown in Fig. 16), such algorithm should preferably be adopted that the attachment through the single movement is first checked.

Referring to Fig. 4, in a step 116, the arithmetic attachability evaluation described hereinbefore is performed for all the attaching sequences determined through the procedure mentioned above. More specifically, in this step 116, movements of the parts required for attachment or mounting thereof which are suited for the attaching sequences generated in the step 113 are detected, while the attribute information stored in the CAD database 22 such as part joining condition, machining information or the like is read out, whereon the detected movements and information read out from the database 22 are compared with the basic elements determined through the attachability evaluation method to thereby determine automatically all the basic elements and supplementary elements as required for each of the parts to be attached. Subsequently, on the basis of these basic elements and supplementary elements, one or both of the attachability evaluation score and attachment cost for each of the parts and hence one or both of the assemblability evaluation score and the assembling cost are determined for each of the parts and the product as a whole, respectively.

Next, in the step 116, the assemblability evaluation scores calculated in the step 115 for all the possible attaching or assembling sequences are mutually compared to finally determine the assembling sequence having the highest evaluation score as the assembling sequence and method which is most rational and economical.

In the foregoing, the part attachment or product assembling method has been described. It will however be understood that the similar automatic evaluation procedure can equally be adopted for the processability evaluation and others inclusive of the inspection susceptibility evaluation which constitutes a part of the manufacturability evaluation, as can be appreciated more clearly by referring to U.S. Patent Applications Ser. Nos. 726,997 and 654,236 mentioned hereinbefore.

It should be added that the results of the evaluations described above can also be made use of in generating automatically a facility control schedule and control information for a robot and machining tools.

Further, by adding the estimated production costs obtained as the result of the assemblability evaluation with the part purchase price data available from the database 17, it is possible to determine at a relatively earlier stage of designing the total prime cost, to a great advantage for developers or design engineers of novel products.

As will now be appreciated from the foregoing, according to the teachings of the present invention, the evaluation of manufacturability of a product can be carried out in a fully-automated or semi-automated manner with the assemblability and the attachability of a product and parts can remarkably be improved, whereby high improvement can be achieved with respect to the efficiency and economy in the manufacture of products or articles.

In other words, there has been provided according to the invention an automatic manufacturability evaluation method and system which can afford quantitative evaluation in a clearly understandable form for a product to be manufactured at the level of part attachment or in a subassembled or completely assembled state instantly at any time in the course of designing with a CAD system without need for any especial knowledge and experience. Besides, owing to facilitated evaluation of the part attachability as well as capability of calculation of the assembling cost and time, economization can easily be accomplished. Hence, the designer himself or herself can evaluate and improve the design in the course of designing, whereby a high-quality design of a product improved in respect to the manufacturability can be created within a relatively short time.

Furthermore, because the rational part attaching sequence and attaching methods can be automatically established already at the stage of design, it is possible to estimate in precedence to production the number and types of production facilities and tools, which is very advantageous for planning the production schedule. Besides, because the information of part attaching and assembling operations to be carried out by production machine or tool such as industrial robot is available at the stage of design, it is possible to generate numerical control data relatively easily and directly from the design information. In the case of machining operation, it is possible at the stage of design how to control a byte of a numerically controlled machining tool.

Additionally, various advantageous effects can be obtained in connection with the production management or control, which will be mentioned below.

(1) Betterment of productivity

(a) Because those areas which require improvement can be pointed out clearly, ease of attaching parts (part attachability) as well as ease of assembling a product (product assemblability) is enhanced, whereby the number of attaching/assembling steps can significantly be reduced.

(b) By virtue of the qualitative evaluation having an enhanced and universal understandability, the results of evaluation can be utilized in common by design engineer, production engineer, control engineer and others in realizing respective targets, whereby many-sided improvement can be assured to enhance surprisingly the assemblability and hence manufacturability with the number of assembling steps being remarkably reduced.

(c) Because of improved product assemblability, the assembling process is simplified, as a result of which mechanization and automatization of the manufacturing process can easily be realized at an earlier stage.

(d) Since the assemblability evaluation and design improvement can be promoted at the early stage of design, time otherwise taken for repetition of trial manufacture and modification of design can significantly be reduced.

(e) Since the cost evaluation of a process improved in respect to the assemblability can easily be made by the designer, the cost estimation based on the design evaluation can be performed by the designer himself or herself without need for the aid of the expert. Thus, time otherwise taken for preparing basic data for the cost estimation (such as preparation of detailed drawing for the estimation as well as time taken for awaiting the result of cost estimation) can remarkably be reduced, which means that the time required for the designing can be shortened significantly.

(2) Reduction in purchase cost and management cost

(a) Owing to geometrical simplification and rationalization of the parts, costs involved in purchasing and managing parts or materials can be reduced.

(b) Owing to simplification of assembling processes and operations, reduction can also be accomplished in respect to the cost involved in purchasing and managing materials or jigs used in the processes.

(3) Betterment of realiability of manufactured product and automatized facilities

(a) Owing to simplification of structure of manufactured product as well as assembling process, the product can enjoy an enhanced reliability.
(b) Because of simplification of the assembling process, reliability of automatized assembling machines or tools can be increased.

Although the advantageous effects afforded by the present invention have been mentioned above in conjunction with the product assemblability, it will readily be understood that similar advantages can equally be obtained in respect to the processability and other aspects.

**Claims**

1. A manufacturability evaluation system, comprising:

input means for inputting design information of articles consisting of an assembled plurality of parts;
estimation means for an estimating method of assembly of the plurality of parts;
evaluation means for evaluating easiness/difficulty of manufacturability of the estimated method of assembly according to an evaluation standard which is stored at memory means; and
output means for outputting the evaluated result.

2. The manufacturability evaluation system according to claim 1, wherein said method of assembly includes assembling sequenceness of said part and assembling movement of said part, said assembling movement corresponding to said evaluation standard.

3. The manufacturability evaluation system according to claim 2, wherein said evaluation standard includes an evaluation value corresponding to said assembling movement.

4. The manufacturability evaluation system according to claim 1, wherein said output means output said evaluated result and said estimated method of assembly.

5. The manufacturability evaluation system according to claim 1, wherein said design information is input by using a CAD system.

6. The manufacturability evaluation system according to claim 1, further comprising:

selection means for selecting at least one evaluated result from said plurality of evaluated results.

7. The manufacturability evaluation system according to claim 1, wherein said manufacturability evaluation system comprises a client machine and a server machine coupled to the client machine, said client machine having said input means and said output means, and said server machine having said estimation means and said evaluation means.

8. A manufacturability evaluation system comprising:

input means for inputting design information of article assembling of a plurality of parts;
evaluation means for estimating the method of assembly of the plurality of parts and evaluating easiness/difficulty of manufacturability of the article according to an evaluation standard; and
output means for outputting the evaluated results.

9. The manufacturability evaluation system according to claim 8, wherein said output means output said evaluated result and said estimated method of assembly.

10. The manufacturability evaluation system according to claim 8, wherein said design information is input by using a CAD system.

11. A manufacturability evaluation system comprising:

input means having an input part for inputting design information of article assembling of a plurality of parts;
evaluation means coupled to the input means, said evaluation means having a memory part for memorizing an evaluation standard, an estimation part for estimating said method of assembly of the plurality of parts, and an evaluation part for evaluating easiness/difficulty of manufacturability of the article according to the evaluation standard; and output means coupled to the evaluation means, said output means having a display part for outputting the evaluated result.

12. The manufacturability evaluation system according to claim 11, wherein said output means output said evaluated result and said estimated method of assembly.

13. The manufacturability evaluation system according to claim 11, wherein said design information is input by using a CAD system.

14. A manufacturability evaluation system comprising:

input means having an input part for inputting design information of article assembling of a plurality of parts; evaluation means coupled to the input means, said evaluation means having a memory part for memorizing an evaluation standard, an estimation part for estimating the method of assembly of the plurality of parts, and an evaluation part for evaluating easiness/difficulty of manufacturability of the estimated method of assembly according to the evaluation standard: and output means coupled to the evaluation means, said output means having a display part for outputting the evaluated result.

15. The manufacturability evaluation system according to claim 14, wherein said output means output said evaluated result and said estimated method of assembly.

16. The manufacturability evaluation system according to claim 14, wherein said design information is input by using a CAD system.

17. A manufacturability evaluation system comprising:

a client machine including input means for inputting design information of article assembling of a plurality of parts; and a server machine coupled to the client machine, said server machine including memory means for memorizing an evaluation value corresponding to a plurality of basic elements, estimation means for estimating a basic element to be performed on the part of the design information, evaluation means for evaluating easiness/difficulty of manufacturability of the part or/and the article from the evaluation value of the estimated basic element, and output means for outputting the evaluated result to the client machine.

18. The manufacturability evaluation system according to claim 17, wherein said client machine and said server machine are coupled via a network.

19. The manufacturability evaluation system comprising:

a client machine including input means for inputting design information of article assembling of a plurality of parts; and a server machine coupled to the client machine, said server machine including memory means for memorizing an evaluation value correspond to a plurality of assembly patterns and estimation rules of selecting at least one assembly pattern from the plurality of assembly patterns, execution means for executing the estimation rule, estimation means for estimating the assembly pattern to be performed on the part, evaluation means for evaluating easiness/difficulty of manufacturability of the part or/and the article from the evaluation value of the estimated assembly pattern, and output means for outputting the evaluated result to the client machine.

20. The manufacturability evaluation system according to claim 19, wherein said client machine and said server machine are coupled via a network.

**FIG.1**

# F I G.2

DISPLAY

21 CAD PROCESSOR

ARITHMETIC PROCESSING UNIT

22

CAD DATABASE

DRAWING  11

DISPLAY  32

30 AUTOMATIC MANUFACTURABILITY EVALUATION SYSTEM

ARITHMETIC PROCESSING UNIT

KEYBOARD

EVALUATION INFORMATION DATABASE  31

PRINTER (RESULT OF EVALUATION)  33

PURCHASE PRICE DATABASE  17

EP 0 819 996 A2

18

# F I G.3A

| PART ID No. | PART NAME | QUANTITY | GEOMETRY INFORMATION | ATTRIBUTES |
|---|---|---|---|---|
| 1 | BASE | 1 | COLUMN (D20×L10, SURFACE ROUGHNESS, COORDINATES, ETC. ) THREADED BORE (D5×L10, COORDINATES) | MATERIAL, ETC. |
| 2 | BLOCK | 1 | RECTANGULAR PRISM (L15×W10×H8, ···) | |
| 3 | EYE-BOLT | 1 | | |

# F I G.3B

CAD DATABASE  22

S  3  2  1

EP 0 819 996 A2

# FIG.4

CAD DATABASE — 22

EXTRACTION OF DRAWING DATA CONCERNING SHAPE, SIZE, PARTNAME, ATTRIBUTES, etc. — 111

COMFIRMATION OF PART INFORMATION

CALCULATION OF PROCESSABILITY EVALUATION INDEX

CALCULATION OF UNIFIED INDEX AND OVERALL COST — 118

DISPLAY — 32

PROCESSABILITY-RELATED BASIC ELEMENT DATA

PROCESSABILITY-RELATED SUPPLEMENTRY ELEMENT DATA

PURCHASE PRICE DATABASE — 17

OUTPUT UNIT — 33

COMFIRMATION OF PART INFORMATION — 112

GENERATION OF ASSEMBLING SEQUENCE — 113

CALCULATING OF ASSEMBL-ABILITY EVALUATION INDEX — 115

DETERMINA-TION OF OPTIMAL ASSEMBILING SEQUENCE — 116

ASSEMBLABILITY-RELATED BASIC ELEMENT DATA

ASSEMBLABILITY-RELATED SUPPLEMAENTARY ELEMENT DATA

(INSPECTABILITY, ETC.)

EP 0 819 996 A2

# F I G.5

EXAMPLES OF RULES FOR REDUCTION OF
PART ATTACHING SEQUENCESS

(1) ATTACHING SEQUENCE IN WHICH FASTENING IS MOUNTED
BEFORE PART TO BE ATTACHED IS UNREASONABLE AND EXCLUDED

(2) WHEN A PART SUCH AS CHASSIS TO BE ATTACHED FIRST IS
PRESCRIBED, PART TO BE ATTACHED IN CONTACT WITH
CHASSIS IS MOUNTED IN PROCEDENCE TO PART TO BE
ATTACHED WITHOUT CONTACT WITH CHASSIS

(3)

# F I G.6A      F I G.6B

NUMBER OF PARTS:n=3
⇒NUMBER OF ATTACHING
SEQUENCES=3!=3·2·1=6

(a) ALL PART ATTACHING
SEQUENCES

NUMBER OF REASONABLE
ATTACHING SEQUENCE
NUMBER = 2

(b) REASONABLE PART
ATTACHING SEQUENCES

# FIG.8

| No. | 1 | 2 | 3 | 4 | 5 | 6 | | 1 2 8 | |
|---|---|---|---|---|---|---|---|---|---|
| REGISTERED PART No. | 1986-2 | 20838-1 | — | 20837-1 | · | · | | · | — |
| PART NAME | CHASSIS | MOTOR BASE As | SCREW | WIRE HARNESS | · | · | | · | TORTAL |
| QUANTITY | 1 | 2 | 4 | 2 | · | · | | · | 1A |
| ESTIMATED ASSEMBLING COST | 20.0 | 50.0 | 30.0 | 120.0 | · | · | | · | 1210.0 |
| ESTIMATED PROCESSING COST | 320.0 | 65.0 | — | — | · | · | | · | 855.0 |
| PART PURCHASE PRICE | — | 120.0 | 16.0 | 60.0 | · | · | | · | 2153.0 |
| TOTAL | 340.0 | 235.0 | 46.0 | 180.0 | · | · | | · | 801.0 |
| PART EVALUATION SCORE Ei | 40 | 75 | 50 | 20 | · | · | | · | 64 |
| PART PROCESSABILITY EVALUATION SCORE mEi | 20 | 80 | — | — | · | · | | · | 70 |
| PART ATTACHABILITY EVALUATION SCORE aEi | 100 | 50 | 50 | 20 | · | · | | · | 55 |
| REQUIRED PROCESSABILITY BASIC ELEMENT | PC ··· | C ··· | — | — | · | · | | · | |
| REQUIRED ASSEMBLABILITY BASIC ELEMENT | ↓ | ↓→ | ↓ | ↓S | · | · | | · | |
| · · · · · · · · · · · · · | | | | | | | | | |

EP 0 819 996 A2

# FIG.7

# FIG.9A

# FIG.9B

FREQUENCY

100    50    0

MANUFACTURABILITY
EVALUATION SCORE

FREQUENCY

100    50    0

MANUFACTURABILITY
EVALUATION SCORE

FIG.10

CAD PROCESSOR

ARITHMETIC PROCESSING UNIT

PURCHASE PRICE DATABASE

STORAGE UNIT

DISPLAY

PRINTER

KEYBOARD

# F I G.11

(NOTE)   $\varepsilon_x = f_i(C_x) = f_{ii}(T_x) = f_i(I_x)$

| BASIC ELEMENTS (X) | | | BASIC ELIMI-NATION SCORE ($\varepsilon_x$) (Note) | ATTACHING COST ($C_x$) | ATTACHING TIME ($T_x$) | ATTACHING COST INDEX ($I_x$) |
|---|---|---|---|---|---|---|
| NAME | SYMBOL (X) | CONTENT | | | | |
| | | | | Yens | min | |
| ATTACHMENT BY DOWNWARD MOVEMENT  10 | ↓ | | 0 | 1.0 | 0.020 | 100 |
| ATTACHMENT BY HORIZONTAL MOVEMENT  11 | → | | 5 | 1.3 | 0.025 | 125 |
| SOLDERING  12 | S | SOLDER LEAD WIRE PCB | | | | |
| | | | | | | |

(Note) NUMBERIC VALUE : $\alpha_n = \left[\dfrac{C_x x_n}{C_x}\right] x\ \text{mean}$

# FIG.12

| SUPPLEMENTARY ELEMENT ($x$) | | | | | SUPPLEMENTARY COEFFICIENT ($\alpha$) | | ATTACHING COST ($C_x x_n$) | |
|---|---|---|---|---|---|---|---|---|
| NAME | SYMBOL ($x$) | CATEGORY | | | | | | |
| | | $n$ | SYMBOL ($x_n$) | CONTENT | (Note) NUMERIC VALUE | SYMBOL ($\alpha$) | $X = \downarrow$ | $X = \rightarrow$ |
| SIZE | $\ell$ | | | MAXIMUM DIMENSION, MASS, OPERATION LENGTH, ETC. | | $\lambda$ | | |
| GEOMETRICAL ACCURACY | $\rho$ | | | CONFIGULATIONAL, OPERATIONAL TOLERANCE, ETC. | | $\theta$ | | |

EP 0 819 996 A2

# F I G.13

```
                    ┌─────────┐
                    │  START  │
                    └─────────┘
                         │
STEP1    ┌───────────────────────────────────────────┐
         │ REPRESENTATION OF OPERATIONS FOR ATTACHING │
         │ PARTS SUBJECTED TO EVALUATION BY SYMBOLS OF│
         │ BASIC ELEMENTS AND SUPPLEMENTARY ELEMENTS  │
         └───────────────────────────────────────────┘
                         │
STEP2    ┌───────────────────────────────────────────┐
         │ INPUTTING TO COMPUTER THE SYMBOLS OF BASIC │
         │ ELEMENTS AND SUPPLEMENTARY ELEMENTS USED   │
         │ FOR REPRESENTING PART ATTACHING OPERETIONS │
         └───────────────────────────────────────────┘
                         │
STEP3    ┌───────────────────────────────────────────┐
         │ CORRECTION OF BASIC ELIMINATION SCORE WITH │
         │ SUPPLEMENTARY COEFFICIENT TO DEFINE PART   │
         │ ELIMINATION SCORE                          │
         └───────────────────────────────────────────┘
                         │
STEP4    ┌───────────────────────────────────────────┐
         │ SUBTRACTION OF PART ELIMINATION SCORE FROM │
         │ STANDARD SCORE (100 POINTS) TO DEFINE PART │
         │ ATTACHABILITY EVALUATION SCORE             │
         └───────────────────────────────────────────┘
                         │
STEP5    ┌───────────────────────────────────────────┐
         │ DETERMINATION OF REPRESENTATIVE MEAN VALUE OF│
         │ PART ATTACHABILITY EVALUATION SCORES FOR ALL │
         │ PARTS CONSTITUTING A PRODUCT OF CONCERN TO DE-│
         │ FINE PRODUCT ASSEMBLABILITY EVALUATION SCORE │
         └───────────────────────────────────────────┘
                         │
STEP6    ┌───────────────────────────────────────────┐
         │ ESTIMATION OF ASSEMBLING TIME OR COST BY   │
         │ USING PRODUCT ASSEMBLABILITY EVALUATION    │
         │ SCORE AND NUMBER OF PARTS                  │
         └───────────────────────────────────────────┘
                         │
                    ┌─────────┐
                    │   END   │
                    └─────────┘
```

# F I G.14A

# F I G.14B

# F I G.15

START

STEP 1　REPRESENTATION OF OPERATIONS FOR ATTACHING PARTS SUBJECTED TO EVALUATION BY COMBINATIONS OF BASIC ELEMENTS AND SUPPLEMENTARY ELEMENTS

STEP 2　INPUTTING TO COMPUTER BASIC ELEMENTS AND SUPPLEMENTARY ELEMENTS

STEP 3　DISPLAYING OF INPUTTED DATA

STEP 4　READING OF BASIC ELIMINATION SCORES AND SUPPLEMENTARY COEFFICIENTS FOR BASIC ELEMENTS AND SUPPLEMENTARY ELEMENTS USED FOR REPRESENTING PART ATTACHING OPERATIONS FROM STORAGE UNIT

STEP 5　MODIFICATION OF BASIC ELIMINATION SCORE WITH SUPPLEMENTARY COEFFICIENTS AND DEFINITION OF SUM OF MODIFIED SCORES AS PART ELIMINATION SCORE

STEP 6　SUBTRACTION OF PART ELIMINATION SCORE FROM STANDARD SCORE (100 POINTS) TO DEFINE PART ATTACHABILITY EVALUATION SCORE

STEP 7　ALL PARTS HAVE BEEN EVALUATED ?　　NO

YES

STEP 8　DETERMINATION OF REPRESENTATIVE MEAN VALUE OF PART ATTACHABILITY EVALUATION SCORES FOR ALL PARTS CON-STITUTING A PRODUCT OF CONCERN TO DEFINE PRODUCT ASSEMBLABILITY EVALUATION SCORE

STEP 9　ESTIMATION OF ASSEMBLING TIME OR COST BY USING PRODUCT ASSEMBLABILITY EVALUATION SCORE AND NUMBER OF PARTS

STEP 10　DISPLAYING OF THE RESULT

END

# F I G.16

PRODUCT : UNIT A

PRODUCTION RATE          350/month

HOURLY SHOP COST     50yen/min

| No. | PART NAME | BASIC ELEMENT | SUPPLEMENTARY ELEMENT | PART ATTACHABILITY EVALUATION SCORE | ESTIMATED PART ATTACHING TIME | PART ATTACHING COST |
|---|---|---|---|---|---|---|
| 1 | BASE | ↑ | L = 10 | 100points | 0.020min | 1.0yen |
| 2 | BLOCK | ↑ | L = 15 | 100points | 0.020min | 1.0yen |
| 3 | EYE-BOLT | ↑◯ | L = 25 | 65points | 0.050min | 2.5yen |

...

| | |
|---|---|
| PRODUCT ASSEMBLABILITY EVALUATION SCORE    54 point | SIMILAR EXISTING PRODUCT : UNIT B |
| NUMBER OF PARTS     80 | ASSEMBLABILITY SCORE OF SIMILAR EXISTING PRODUCT:   40 point |
| ESTIMATED PRODUCT ASSEMBLING TIME   2.6 min | NUMBER OF PARTS OF SIMILAR EXISTING PRODUCT:   110 |
| ESTIMATED PRODUCT ASSEMBLING COST   130 yen | ACTUAL ASSEMBLING TIME OF SIMILAR EXISTING PRODUCT :   3.5min |
| | ACTUAL ASSEMBLING COST OF SIMILAR EXISTING PRODUCT :   175 yen |